# EUROPEAN PATENT APPLICATION

(11) **EP 3 299 156 A1**
(43) Date of publication of application: **28.03.2018**
(21) Application number: 17193250.2
(22) Date of filing: 26.09.2017
(51) Int. Cl.: B29C 73/32, B29C 73/34, B29C 73/12, B29C 35/02, B29C 70/34

(54) **VACUUM BLANKET FOR COVERING A WIND TURBINE COMPONENT AND METHOD FOR MANUFACTURING AN ARRANGEMENT OF THE VACUUM BLANKET AND THE WIND TURBINE COMPONENT**

(30) Priority: 27.09.2016 DE 102016218592
(71) Applicant: Siemens Aktiengesellschaft, 80333 München (DE)
(72) Inventor: Dahl Porsgaard, Bjoern, 8700 Horsens (DK); Kratmann, Kasper Koops, DK/ 8700 Horsens (DK); Stege, Jason, 7330 Brande (DK)

(57) **Abstract**

A vacuum blanket (11) for covering a wind turbine component (12), wherein the vacuum blanket (11) comprises
- At least one vacuum unit (113) for a vacuum assisted arranging (1511) of the vacuum blanket (11) and the wind turbine component (12);
- At least one cross linking support device (114) for initiating and/or for supporting a cross linking of cross linkable adhesive which is arranged between the vacuum blanket (11) and the wind turbine component (12).

In addition to the vacuum blanket (11), method for manufacturing an arrangement (1) of a vacuum blanket according to one of the claims 1 to 11 and a wind turbine component (12) with following steps:
a) Applying of at least one precursor material (1312) of the adhesive material (1311) onto a component surface (121) of the wind turbine component (12);
b) Bringing together the vacuum blanket (11) and the wind turbine component (12) such that the precursor material (1312) is enclosed by the vacuum blanket; and
c) Transforming of the precursor material (1312) into the adhesive material (1311);
wherein during the step b) and/or during the step c) an application of vacuum with the aid of the vacuum unit is carried out for a vacuum assisted arranging of the vacuum blanket and the wind turbine component.

Preferably, a precursor material with at least one curable resin is used and the transforming comprises a temperature regulated curing of the resin. The wind turbine is preferably a wind turbine blade. With the vacuum blanket a safe repair of the wind turbine blade is possible.

## Description

### BACKGROUND OF THE INVENTION

### 1. FIELD OF THE INVENTION

The present invention refers to vacuum blanket for covering a wind turbine component and a method for manufacturing an arrangement of the vacuum blanket and the wind turbine component.

### 2. DESCRIPTION OF THE RELATED ART

For instance, the wind turbine component is a wind turbine blade. A repair of the wind turbine blade in a site of wind farm with the wind turbine or the mounting of a leading edge protection covers are needed from time to time. Time is a critical cost factor for these operations as hourly costs are high, particularly when repair has to be done on site on a wind turbine.

For the repair of the wind turbine blade a cover is adhered to the blade surface of the wind turbine blade. For instance, the used adhesive is a curable resin. The reduction of curing time will give a significant upside to in field repair cost due to high hour cost of field work. For the reducing of the repair time, accelerarating agents can be used. But in this case, only have a specific time window is available for the repair.

### SUMMARY OF THE INVENTION

It is an objective of the invention to provide a possibility to add a cover at a specific position of a wind turbine component which reduced costs in comparison to the state of the art.

This objective is achieved by the invention specified in the claims.

According to the invention a vacuum blanket for covering a wind turbine component is provided, wherein the vacuum blanket comprises at least one vacuum unit for a vacuum assisted arranging of the vacuum blanket and the wind turbine component, at least one cross linking support device for initiating and/or for supporting a cross linking of cross linkable adhesive which is arranged between the vacuum blanket and the wind turbine component.

In addition to the vacuum blanket, a method for manufacturing an arrangement of the vacuum blanket and a wind turbine component with following steps is provided: a) Applying of at least one precursor material of the adhesive material onto the blanket surface of the vacuum blanket and/or onto the component surface of the wind turbine component, b) Bringing together the vacuum blanket and the wind turbine component such that the precursor material is enclosed by the vacuum blanket; and c) transforming of the precursor material into the adhesive material, wherein during the step b) and/or during the step c) an application of vacuum with the aid of the vacuum unit is carried out for a vacuum assisted arranging of the vacuum blanket and the wind turbine component. Preferably, a precursor material with at least one curable resin is used and the transforming of the resin comprises a curing of the resin.

The vacuum blanket is a vacuum cover for covering the surface of the wind turbine component at least during the transforming step. The connection can be permanent. Preferably, the connection is non permanent. After the transforming of the precursor material the vacuum blanket is removed from the wind turbine component.

The vacuum is selected from the range between 200-300 hPa. This refers to an absolute pressure. Equal to that is a range up to of -700 hPa to -800 hPa relative to atmospheric pressure.

Preferably, the wind turbine component is a wind turbine blade.

The idea of the invention is the application of vacuum assisted arranging of the vacuum blanket and the wind turbine component. By the vacuum a tight contact (form closure) between the vacuum blanket and the component surface of the wind turbine component is ensured. The precursor material is a curable adhesive. With the aid of the cross linking support device a curing of the precursor material is initiated and/or supported.

In a preferred embodiment, the vacuum blanket comprises at least one blanket sealing for ensuring the vacuum assisted arranging of the vacuum blanket and the wind turbine component. Preferably, the blanket sealing comprises at least on circumferential lip of the vacuum blanket.

The vacuum unit can comprises any vacuum component which is necessary for the application of a respective vacuum. For instance, such vacuum components are pumps and respective connection pieces. In a preferred embodiment, the vacuum unit comprises at least one vacuum channel of the vacuum blanket. The vacuum channel is or the vacuum channels are integrated into the vacuum blanket.

In order to support the vacuum assisted arranging of the vacuum blanket and the wind turbine component the vacuum blanket is flexible. The vacuum blanket or the vacuum sealing are capable for a deformation, preferable for high elastic deformation.- caused by the application of vacuum. Therefore, in a preferred embodiment, the vacuum blanket and/or the vacuum sealing comprise elastomeric material. Preferably, the elastomeric material comprises a material which is selected from the group consisting of polyurethane or silicone. The polyurethane can be aromatic and/or an aliphatic.

The result of the arrangement is an enforced wind turbine component. In order to get a further enforced wind turbine component it is advantageous to incorporate stiffening members. The purpose of the stiffening members is an improvement of a handling of the vacuum blanket. Without these stiffening members the vacuum blanket would be too flexible. Therefore, in a preferred embodiment, the vacuum blanket comprises at least on stiffening member for stiffening the vacuum blanket.

The cross linking support device can comprise a single part. Preferably, the cross linking support device comprises a number of parts which are spread over the vacuum blanket. In a preferred embodiment, the cross linking support device is arranged in at least two zones of the vacuum blanket. For instance, the cross linking support device comprises a resistance heating (see below) with different parts. By this measure, the temperatures in different zones of the vacuum blanket can be controlled. The resistance heating can be split in several zones that can be controlled independently. Individual zone control can be used to account for temperature and heat conductivity differences caused by light and shade on site, wind chill, underlying structural build up or the need for differentiated temperature profiles.

The cross linking support device initiates and supports the cross linking of the precursor material. The cross linking with the aid of the cross linking support device results in a cross linking percentage of at least 90% or of at least 95%. The cross linking percentage is the amount of cross linked precursor material.

The cross linking can be carried out with the aid of light. Preferably, heat (thermal energy) is applied to the precursor material. In this case, the vacuum blanket is a vacuum heat blanket. Preferably, the cross linking support device comprises at least one resistance heating. The resistance heating can be incorporated into the vacuum blanket with the aid of copper lines. In a preferred embodiment, the resistance heating comprises carbon fibers. The carbon fibers are light. The carbon fibers are flexible, too. They comprise a higher flexibility in comparison to a other materials like copper.In addition, the carbon fibers can form a web. With the web a two dimensional acting of the resistance heating is possible. Carbon fiber weave can be used as resistance heating, enabling 6000w/m² with uniform temperature distribution (+/- 3 deg).

A power supply of the vacuum blanket can be done through a portable generator or through a power cable. In a preferred embodiment, the electrical heating is driven by a current of a portable battery pack and/or by a current of a public network. The current of the public network is an arbitrary current which comprises about 230V (230VAC). The battery pack can be incorporated into the arrangement.

It is advantageous to monitor the curing process. This refers to the monitoring of the temperatures at different locations for the arrangement of the vacuum blanket and the wind turbine component as well as the monitoring of the applied vacuum. In a preferred embodiment, the arrangement is equipped with at least one sensor which is selected from the group consisting of vacuum sensor and temperature sensor (e.g. pt100). By this a monitoring of heat build-up and distribution is possible. If several heating zones are used, the use of individual temperature sensors is advantageous.

Preferably, in order to control the curing process and in order to guarantee a specific quality of the method one controller for controlling a value of a physical characteristic and/or at least one logger for logging the value of the physical characteristic are used. The controller is selected from the group consisting of temperature controller and vacuum controller and the logger is selected from the group consisting of temperature logger and/or vacuum logger. The vacuum and the temperature are controlled and logged.

The controller can comprise a PID (proportional integral derivate which is based on a control feedback mechanism) regulated power controller for temperature control of individual zones. The power output can be a thyristor based PWM (pulse width modulation) control or a simple solid state relay, depending on the resistance in the heating element. The power control enables custom designed heating cycles, with heat-up ramps, temperature set-points, dwell times and audiovisual alarms indicating process errors such as loss of vacuum and also indication of process end.

With the aid of the vacuum blanket the curing of the precursor material is ensured while vacuum is applied for a close connection of the vacuum blanket and the wind turbine component. Vacuum ensures full contact between the vacuum blanket and the component surface, e.g. the blade surface. This enables the heat from the vacuum blanket to dissipate into the blade, because heat insulating air voids are avoided (In conventional designs without vacuum poor contact between blanket and blade and a high power rating will create hotspots on the blanket, causing it to short circuit and fail.).

Following additional requirements and advantages are fulfilled with respect to a vacuum heat blanked (see above):
- An exceeding 90°C is prohibited.
- Low power of the resistance heating of 200-300w/m².
- Poor contact between vacuum blanket and blade surface.
- A uniform heat distribution (less than +/- 10deg) is possible.
- Fast heat controlling is possible.

Moreover, following advantages have to be mentioned:
- The method can be used on site. For instance, this can be done by placing on a platform which is lowered on a rope from the nacelle of a wind turbine.
- For quality assurance the controller is setup log several input with a sampling interval ranging from 1s to 1 hour.
- Temperature response from all temperature sensors.
- The method can be carried out at ambient temperature and ambient humidity.
- Site, turbine, blade id, span-wise position, tool id and technician id of each individual repair could be collected by barcode scanner for inputting the above data. This reduces the possibility of typing errors.
- These data can be stored on a memory card in the controller and can continuously be buffered (e.g. to a cloud) or transferred directly to a server or transferred manually using USB interface.
- The controller can have an in-built 3G/GSM/wifi-module. This enables the above data transfer. Furthermore, it enables online monitoring, remote error handling and software upgrades.

### BRIEF DESCRIPTION OF THE DRAWINGS

Further features and advantages of the invention are produced from the description of exemplary embodiments with reference to the drawings. The drawings are schematic.

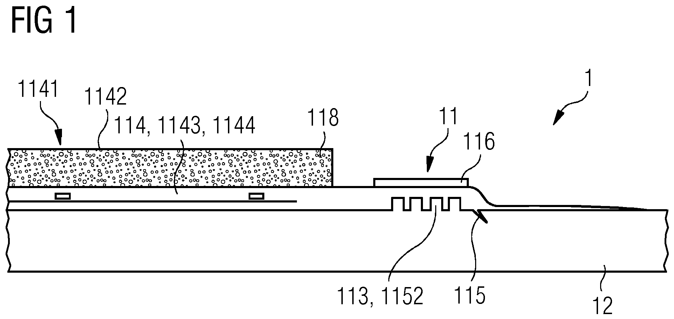

Figure 1 shows the vacuum blanket on a wind turbine blade in a cross section.
Figure 2 shows an exploded view of the vacuum blanket.

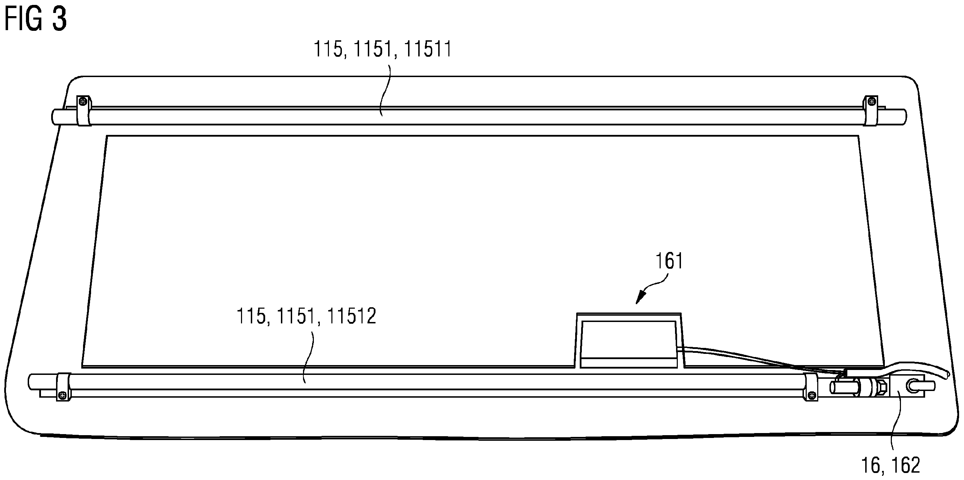

Figure 3 shows an exterior surface of the vacuum blanket.

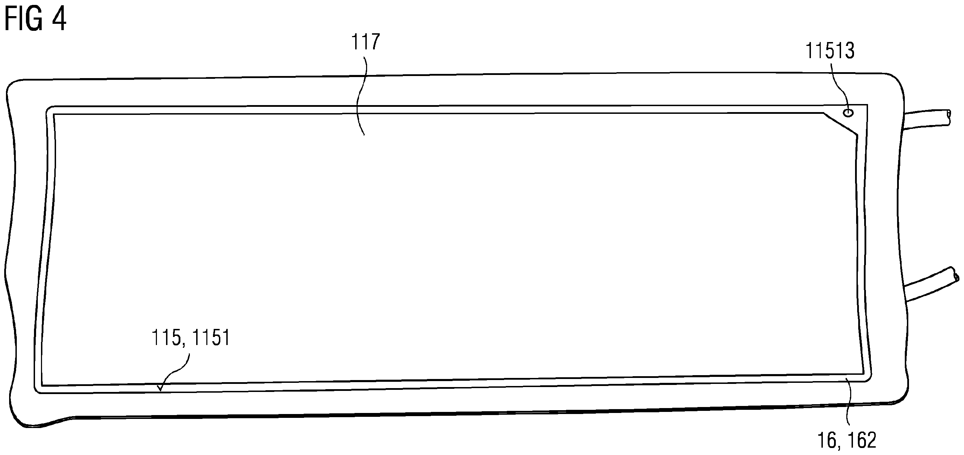

Figure 4 shows an interior surface of the vacuum blanket.

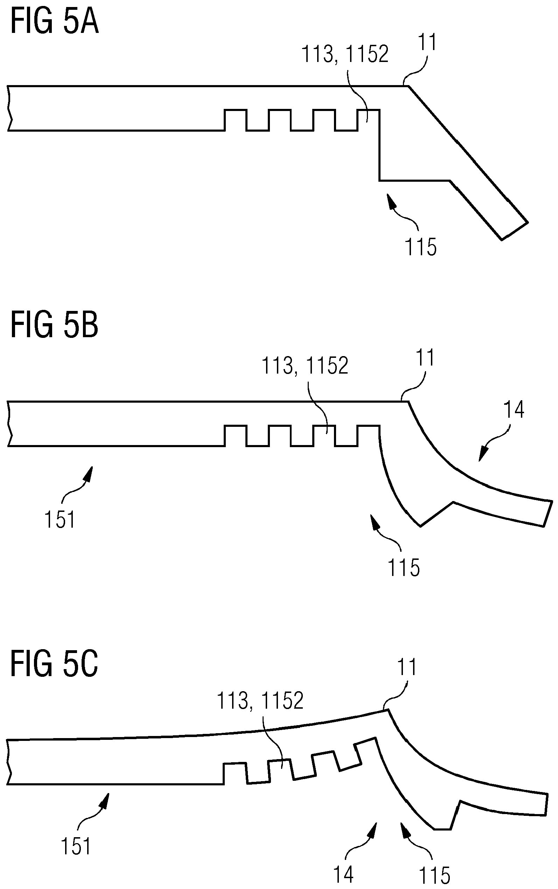

Figure 5A shows a vacuum blanket without the application of vacuum.
Figures 5B and 5C show the vacuum blanket at which vacuum is applied.

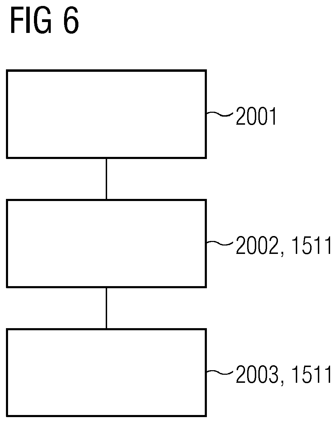

Figure 6 show a method for manufacturing of an arrangement of a vacuum blanket according and a wind turbine component

### DESCRIPTION OF PREFERRED EMBODIMENTS

Core of this invention is a vacuum blanket 11 for covering a wind turbine component 12. The vacuum blanket 11 comprises at least one vacuum unit 113 for a vacuum assisted arranging 1511 of the vacuum blanket 11 and the wind turbine component 12, at least one cross linking support device 114 for initiating and/or for supporting a cross linking of cross linkable adhesive which is arranged between the vacuum blanket 11 and the wind turbine component 12. The vacuum unit 115 comprises at least one vacuum channel 1152 of the vacuum blanket 11. Other components of the vacuum unit are vacuum channels 11513 and at least one not shown pump for production of a vacuum. The wind turbine component is a wind turbine blade. A blanket sealing 115 ensured the vacuum assisted arranging of the vacuum blanket 11 and the wind turbine blade 12.

The blanket sealing 115 comprises at least on circumferential lip 1151 of the vacuum blanket 11. The circumferential lip 1151 comprises two opposite parts 11511 and 11512.

The vacuum blanket 11 and the vacuum sealing 115 (the sealing lip respectively) comprise elastomeric material. The elastomeric material is silicone. Alternatively, the elastomeric material is polyurethane.

In addition, the vacuum blanket 11 comprises at least one stiffening members 116 for stiffening the vacuum blanket 11. The stiffening member 116 is an aluminum stiffening member. Alternatively, light weight carbon fiber.

The vacuum blanket is provided on its inner surface with a heat conductive silicon 117. Moreover, an insulation 118 comprising silicon foam is on top of the blanket

The cross linking support device 116 comprises at least one resistance heating 1141. The resistance heating comprises carbon fibers 11444. The electrical heating is driven by a not shown portable battery pack.

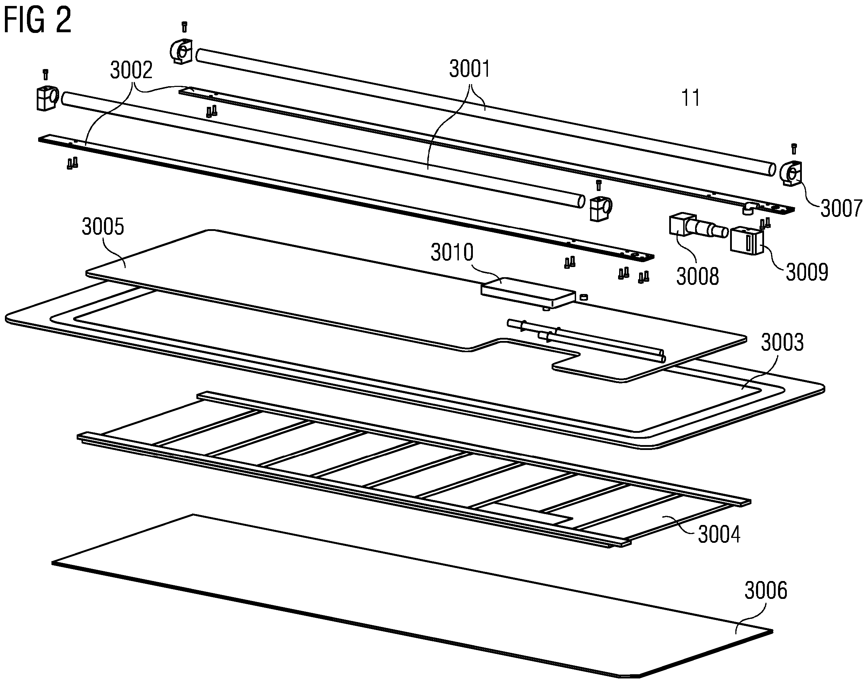

Looking at figure 2 following elements of the vacuum blanket 11 can be seen:
Carbon tube rails 3001 with carbon fibers, aluminum rails 3002, silicone vacuum seal 3003 with blanket seal, copper strips 3004, foam 3005, heat conductive silicone, clamp 3007, vacuum sensor 3008, vacuum block 3009 and silicone moling 3010.

Concerning the method for manufacturing the arrangement 1 following steps are carried out:
a) Applying (step 2001) of at least one precursor material 1312 of the adhesive material 1311 onto a component surface 121 of the wind turbine component 12;
b) Bringing together (step 2002) of the vacuum blanket 11 and the wind the component 12 such that the precursor material 1312 is enclosed by the vacuum blanket; and
c) Transforming (step 2003) of the precursor material 1312 into the adhesive material 1311;
wherein during the step b) and/or during the step c) an application of vacuum with the aid of the vacuum unit is carried out for a vacuum assisted arranging of the vacuum blanket and the wind turbine component.

Thereby a precursor material with at least one curable resin is used and the transforming of the resin into the connection material comprises a curing of the resin.

In addition, at least one sensor 16 is used which is selected from the group consisting of vacuum sensor 162 and temperature sensor 161. Moreover, at least one controller for controlling the vacuum and/or at least logger are use which is selected from the group consisting of temperature logger and vacuum logger.

In addition, at least one controller for controlling a value of a physical characteristic and/or at least one logger for logging the value of the physical characteristic are provided. For that, a vacuum sensor 162 and a temperature a temperature sensor are used.

Moreover, respective loggers for logging the value of the temperature (temperature logger) and for logging the value of the vacuum (vacuum logger) are used.

## Claims

1. Vacuum blanket (11) for covering a wind turbine component (12), wherein the vacuum blanket (11) comprises
- At least one vacuum unit (113) for a vacuum assisted arranging (1511) of the vacuum blanket (11) and the wind turbine component (12);
- At least one cross linking support device (114) for initiating and/or for supporting a cross linking of cross linkable adhesive which is arranged between the vacuum blanket (11) and the wind turbine component (12).

2. Vacuum blanket according to claim 1 with at least one blanket sealing (115) for ensuring the vacuum assisted arranging of the vacuum blanket (11) and the wind turbine component (12).

3. Vacuum blanket according to claim 2, wherein the blanket sealing (115) comprises at least on circumferential lip (1151) of the vacuum blanket (11).

4. Vacuum blanket according to one of the claims 1 to 3, wherein the vacuum unit (115) comprises at least one vacuum channel (1152) of the vacuum blanket (11).

5. Vacuum blanket according to one of the claims 1 to 4, wherein the vacuum blanket (11) and/or the vacuum sealing (115) comprise elastomeric material.

6. Vacuum blanket according to claim 5, wherein the elastomeric material comprises a material which is selected from the group consisting of polyurethane or silicone.

7. Vacuum blanket according to one of the claims 1 to 6, wherein the vacuum blanket (11) comprises at least on stiffening member (116) for stiffening the vacuum blanket (11).

8. Vacuum blanket according to one of the claims 1 to 7, wherein the cross linking supporting device (114) which is arranged in at least two zones (1141, 1142) of the vacuum blanket (11).

9. Vacuum blanket according to one of the claims 1 to 8, wherein the he cross linking support device comprises at least one resistance heating (1143).

10. Vacuum blanket according to claim 9, wherein the resistance heating comprises carbon fibers (1144).

11. Vacuum blanket according to claim 9 or 10, wherein the electrical heating is driven by a current of a portable battery or a current of a public network.

12. Method for manufacturing an arrangement (1) of a vacuum blanket according to one of the claims 1 to 11 and a wind turbine component (12) with following steps:
a) Applying of at least one precursor material (1312) of the adhesive material (1311) onto a component surface (121) of the wind turbine component (12);
b) Bringing together the vacuum blanket (11) and the wind turbine component (12) such that the precursor material (1312) is enclosed by the vacuum blanket; and
c) Transforming of the precursor material (1312) into the adhesive material (1311);
wherein during the step b) and/or during the step c) an application of vacuum with the aid of the vacuum unit is carried out for a vacuum assisted arranging of the vacuum blanket and the wind turbine component.

13. Method according to claim 12, wherein a precursor material with at least one curable resin is used and the transforming of the resin into the connection material comprises a curing of the resin.

14. Method according to claim 12 or 13, wherein as wind turbine component a wind turbine blade is used.

15. Method according to one of the claims 12 to 14, wherein at least one sensor is used which is selected from the group consisting of vacuum sensor and temperature sensor.

16. Method according to one of the claims 12 to 15, wherein at least one controller for controlling a value of a physical characteristic and/or at least one logger for logging the value of the physical characteristic.

17. Method according to one of the claim 16, wherein the controller is selected from the group consisting of temperature controller and vacuum controller and the logger is selected from the group consisting of temperature logger and/or vacuum logger.
